# FASCICULE DE BREVET EUROPEEN

(11) **EP 2 650 499 B1**
(45) Date de publication et mention de la délivrance du brevet: **11.03.2015**
(21) Numéro de dépôt: 13160715.2
(22) Date de dépôt: 22.03.2013
(51) Int. Cl.: F01N 11/00, F01N 3/20, F02D 41/14, F02D 41/22

(54) **Procédé de controle d'une efficacité d'un système de post-traitement de gaz d'échappement**
Kontrollverfahren der Wirksamkeit eines Abgasnachbehandlungssystems
Method for monitoring the efficiency of a system for after-treatment of exhaust gas

(30) Priorité: 13.04.2012 FR 1253421
(43) Date de publication de la demande: 16.10.2013
(73) Titulaire: PEUGEOT CITROËN AUTOMOBILES SA, 78140 Velizy-Villacoublay (FR)
(72) Inventeur: Georgiadis, Evangelos, 75013 PARIS (FR); Bizet, Charles, 75015 PARIS (FR)

(56) Documents cités:
- EP-A1- 2 141 331
- WO-A1-2011/145574
- US-A- 5 426 934
- US-A1- 2003 051 468

## Description

La présente invention relève du domaine des algorithmes de pilotage et de contrôle des systèmes de post-traitement de gaz d'échappement produits par un moteur à combustion interne équipant un véhicule automobile. Elle a pour objet un procédé de mise en oeuvre d'un tel système.

Le document FR 2,956,697 (Peugeot Citroën Automobiles SA) décrit un véhicule automobile pourvu d'un moteur à combustion interne qui est équipé d'une ligne d'échappement de gaz d'échappement produits par le moteur à combustion interne. La ligne d'échappement est équipée d'un système de post-traitement des gaz d'échappement pour éviter un rejet vers un environnement extérieur au véhicule automobile d'oxydes d'azote contenus à l'intérieur des gaz d'échappement. Le système de post-traitement comprend un catalyseur de réduction des oxydes d'azote qui équipe la ligne d'échappement. Le système de post-traitement comprend également un injecteur qui délivre un agent réducteur à l'intérieur de la ligne d'échappement, en amont du catalyseur de réduction selon un sens de circulation des gaz d'échappement à l'intérieur de la ligne d'échappement. A l'intérieur du catalyseur de réduction, les oxydes d'azote sont réduits préalablement à leur évacuation vers un environnement extérieur au véhicule automobile.

Le document FR 2,956,697 décrit également un procédé de contrôle d'une efficacité du système de post-traitement. Le procédé comporte un contrôle en boucle ouverte de l'injection de l'agent réducteur, une estimation de l'efficacité du post-traitement ainsi qu'une comparaison de cette dernière par rapport à un potentiel de conversion maximale obtenu si le rapport entre une quantité d'agent réducteur injectée et une quantité d'oxydes d'azote dans les gaz d'échappement respecte une consigne donnée et si une masse d'agent réducteur stockée à l'intérieur du catalyseur de réduction respecte une consigne de stockage donnée. Le procédé comporte alors une requête de correction de la consigne de stockage de l'agent réducteur si un défaut de post-traitement est observé. Il est aussi connu du document EP2141331 un procédé de contrôle d'un système de post-traitement de gaz d'échappement avec un catalyseur de réduction comprenant une étape d'injection d'un agent réducteur à l'intérieur d'une ligne d'échappement.

Un problème général posé dans le domaine des procédés de contrôle du type susvisé réside dans une occurrence de dispersions et de dérives de composants du moteur à combustion interne et/ou du système de post-traitement. De telles dispersions ou dérives sont par exemple celles d'un système d'injection du moteur à combustion interne, de l'injecteur qui introduit l'agent réducteur dans la ligne d'échappement, du catalyseur d'oxydation ou du catalyseur de réduction, du capteur NOx et des capteurs de température. Ces dispersions et dérives créent une différence entre une valeur nominale et une valeur réelle d'un débit d'oxydes d'azote en entrée du catalyseur de réduction. Une telle différence est susceptible d'induire un calcul erroné de l'efficacité réelle, notamment de plusieurs dizaines de pourcents. Il en résulte une stratégie de surveillance de la dite efficacité qui est erronée à partir de la prise en compte de résultats contraires à la réalité. De tels résultats erronés sont plus ou moins dispersés selon une persistance importante de ladite dérive ou selon une occurrence temporaire de cette dernière. Plus particulièrement, dans le cas d'une dérive persistante, un inconvénient majeur réside en l'existence d'une zone incertaine de fonctionnement pour laquelle une efficacité estimée dudit système est finalement aléatoire, ce qu'il est préférable d'éviter. Plus particulièrement encore, dans le cas où le système de post-traitement comprend un unique capteur d'oxydes d'azote disposé en aval du catalyseur de réduction, il apparaît que la zone incertaine de fonctionnement est importante et mérite d'être réduite.

Le but de la présente invention est de proposer un procédé de mise en oeuvre d'un système de post-traitement de gaz d'échappement produits par un moteur à combustion interne équipant un véhicule automobile, un tel procédé étant fiable au regard d'une information relative à une efficacité de post-traitement que le procédé permet d'obtenir, pour déterminer avec certitude qu'une émission d'oxydes d'azote contenus à l'intérieur des gaz d'échappement et évacués vers un environnement extérieur au véhicule automobile est inférieure de manière certaine à une quantité-seuil.

Un procédé de la présente invention est un procédé de contrôle d'une efficacité d'un système de post-traitement de gaz d'échappement produits par un moteur à combustion interne équipant un véhicule automobile. Le procédé comprend une étape d'injection d'un agent réducteur à l'intérieur d'une ligne d'échappement. Le système de post-traitement comprend un catalyseur de réduction.

Selon la présente invention, le procédé comprend une première étape de vérification préalablement à une deuxième étape d'analyse d'une efficacité dudit système.

La première étape de vérification comprend une vérification de l'une quelconque des conditions de premier type qui sont constitués de conditions de vérification d'état de composants du système de post-traitement.

Les conditions de premier type comprennent avantageusement une première condition de premier type comprenant une vérification qu'un capteur d'oxydes d'azote est opérationnel, et une deuxième condition de premier type comprenant une vérification qu'un injecteur d'agent réducteur est opérationnel.

Le procédé comprend avantageusement une vérification de l'une quelconque des conditions de deuxième type, la vérification des conditions de deuxième type étant effectuée après la vérification d'une des conditions de premier type.

Les conditions de deuxième type comprennent avantageusement des conditions d'un premier groupe qui sont relatives au système de post-traitement ainsi que des conditions d'un deuxième groupe qui sont relatives au moteur à combustion interne du véhicule automobile.

Les conditions de premier groupe comprennent au moins une condition prise seule ou en combinaison parmi :

-notamment une première condition du premier groupe qui comprend une vérification qu'une deuxième température d'un air ambiant est comprise entre une deuxième température minimale et une deuxième température maximale.

- notamment une deuxième condition du premier groupe qui comprend une vérification qu'un premier débit d'air pris en entrée du moteur à combustion interne est compris entre un premier débit d'air minimum et un premier débit d'air maximum.

-notamment une troisième condition du premier groupe qui comprend une vérification qu'un deuxième débit de gaz dans la ligne d'échappement pris en sortie de la chambre de combustion du moteur est compris entre un deuxième débit d'air minimum et un deuxième débit d'air maximum.

- notamment une quatrième condition du premier groupe qui comprend une vérification qu'un troisième débit d'oxydes d'azote estimé en sortie d'une chambre de combustion du moteur à combustion interne est compris entre un troisième débit d'air minimum et un troisième débit d'air maximum.
- notamment une cinquième condition du premier groupe qui comprend une vérification qu'une troisième température du catalyseur de réduction est comprise entre une troisième température minimale et une troisième température maximale.
- notamment une sixième condition du premier groupe qui comprend une vérification qu'une efficacité de post-traitement des oxydes d'azote estimée en sortie du catalyseur de réduction est comprise entre une efficacité minimale et une efficacité maximale.
- notamment une septième condition du premier groupe qui comprend une vérification qu'une masse d'un agent réducteur stockée à l'intérieur du catalyseur de réduction est comprise entre une masse minimale et une masse maximale.

Les conditions de deuxième groupe comprennent au moins une condition prise seule ou en combinaison parmi :
- notamment une première condition du deuxième groupe qui comprend une vérification qu'une vitesse du véhicule automobile est comprise entre une vitesse minimale et une vitesse maximale.
- notamment une deuxième condition du deuxième groupe qui comprend une vérification qu'un couple-moteur délivré par le moteur à combustion interne est compris entre un couple-moteur minimum et un couple-moteur maximum.
- notamment une troisième condition du deuxième groupe qui comprend une vérification qu'un gradient du couple-moteur délivré par le moteur à combustion interne est compris entre un gradient minimum et un gradient maximum.
- notamment une quatrième condition du deuxième groupe qui comprend une vérification qu'un quatrième débit d'un carburant injecté par un injecteur de carburant à l'intérieur d'une chambre de combustion du moteur à combustion interne est compris entre un quatrième débit minimum et un quatrième débit maximum.
- notamment une cinquième condition du deuxième groupe qui comprend une vérification qu'un phasage d'injection de carburant à l'intérieur d'une chambre de combustion du moteur à combustion interne est compris entre un phasage minimum et un phasage maximum.
- notamment une sixième condition du deuxième groupe qui comprend une vérification qu'une quatrième température du moteur à combustion interne est comprise entre une quatrième température minimale et une quatrième température maximale.

La deuxième étape d'analyse de l'efficacité dudit système précède avantageusement une troisième étape de comparaisons successives de l'efficacité à une efficacité-seuil.

Si l'efficacité est inférieure de manière répétée à l'efficacité-seuil, le procédé comprend préférentiellement une opération de recalage en boucle fermée du système.

Selon une variante de réalisation, la deuxième étape d'analyse de l'efficacité dudit système est effectuée lorsque l'un quelconque de paramètres vérifiés lors de la première étape de vérification prend successivement une première valeur particulière, puis une deuxième valeur particulière.

D'autres caractéristiques et avantages de la présente invention apparaîtront à la lecture de la description qui va en être faite d'exemples de réalisation, en relation avec les figures des planches annexées, dans lesquelles

La figure 1 est une vue schématique d'un moteur à combustion interne d'un véhicule automobile équipé d'un système de post-traitement qui est mis en oeuvre selon un procédé de la présente invention.

La figure 2 est une vue schématique d'un algorithme symbolisant le procédé de de la présente invention pour la mise en oeuvre du système de post-traitement représenté sur la figure précédente.

Les figures 3 et 4 sont des représentations schématiques d'étapes constitutives du procédé illustré sur la figure 2.

La figure 5 est une vue schématique de plages de mise en oeuvre de la présente invention selon une variante de réalisation.

Les figures 6a à 6d sont des illustrations schématiques respectives de résultat ou de conditions de mise en oeuvre de la présente invention.

La figure 7 représente schématiquement des occurrences d'efficacité relatives à une défaillance ou une non-défaillance du système représenté sur la figure 1.

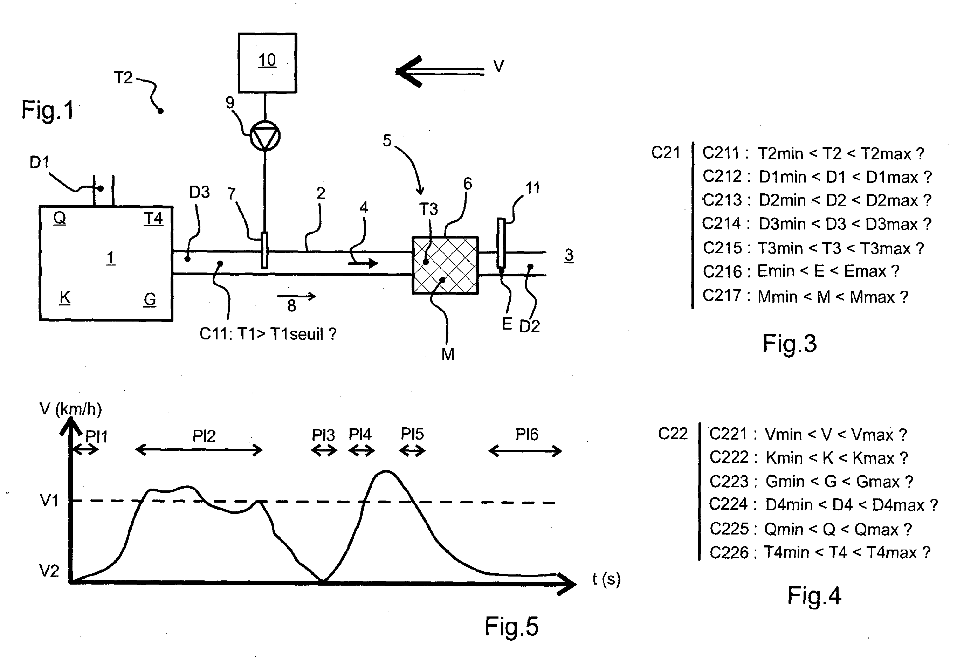

Sur la figure 1, un véhicule automobile est équipé d'un moteur à combustion interne 1 pour son déplacement. Le moteur à combustion interne 1 est équipé d'une ligne d'échappement 2 pour évacuer vers un environnement extérieur 3 des gaz d'échappement 4 produits par le moteur à combustion interne 1. Le véhicule automobile est également pourvu d'un système 5 de post-traitement des gaz d'échappement 4 pour éviter un rejet vers l'environnement extérieur 3 d'oxydes d'azote NOₓ (x étant égal à 1 ou 2) contenus à l'intérieur des gaz d'échappement 4. Le système 5 comprend un catalyseur de réduction 6 qui équipe la ligne d'échappement 2. Le système 5 comprend aussi un injecteur d'agent réducteur 7 qui est disposé sur la ligne d'échappement 2 en amont du catalyseur de réduction 6 selon un sens de circulation 8 des gaz d'échappement 4 à l'intérieur de la ligne d'échappement 2. L'injecteur d'agent réducteur 7 est apte à délivrer un agent réducteur, tel que de l'ammoniac ou analogue, à l'intérieur de la ligne d'échappement 2. A cet effet, l'injecteur d'agent réducteur 7 est en relation avec une pompe 9 qui est apte à amener l'agent réducteur depuis une source 10 d'agent réducteur vers l'injecteur d'agent réducteur 7. L'agent réducteur est destiné à réduire les oxydes d'azote à l'intérieur du catalyseur de réduction 6 préalablement à leur évacuation vers l'environnement extérieur 3. La ligne d'échappement 2 est également équipée d'au moins un capteur d'oxydes d'azote 11. Le capteur d'oxydes d'azote 11 est destiné à mesurer une teneur en oxydes d'azote des gaz d'échappement 4. Dans le cas où la ligne d'échappement 2 est pourvue d'un unique capteur d'oxydes d'azote 11, ce dernier est susceptible d'être placé en aval du catalyseur de réduction 6 selon le sens de circulation 8 des gaz d'échappement 4 à l'intérieur de la ligne d'échappement 2. Dans le cas (non représenté) où la ligne d'échappement est pourvue de deux capteurs d'oxydes d'azote, un premier capteur est susceptible d'être placé en aval du catalyseur de réduction selon le sens de circulation des gaz d'échappement à l'intérieur de la ligne d'échappement et un deuxième capteur est susceptible d'être placé en amont du catalyseur de réduction selon le sens de circulation des gaz d'échappement à l'intérieur de la ligne d'échappement

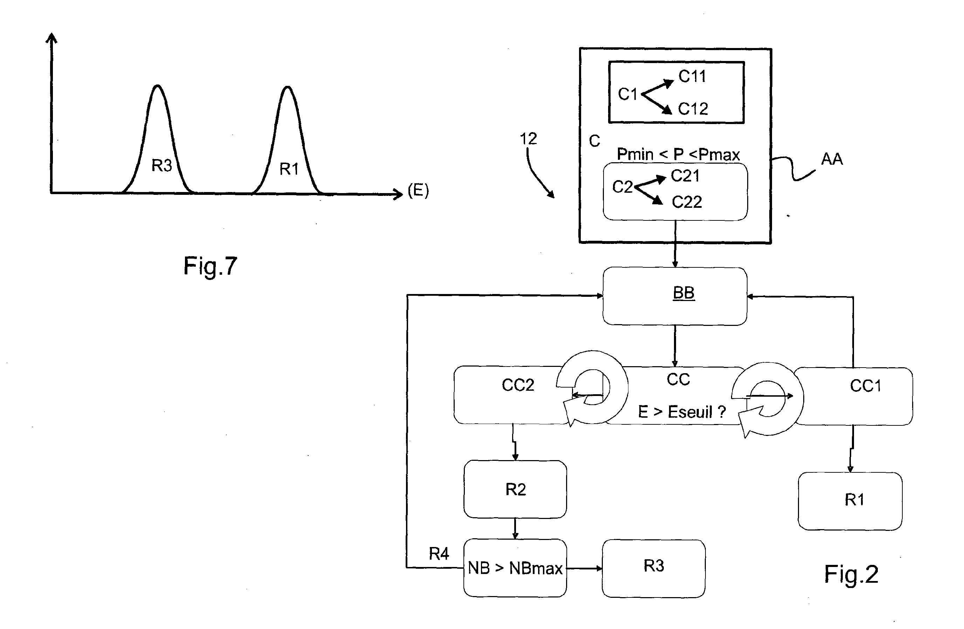

Sur la figure 2, est représenté un algorithme 12 illustrant un procédé de contrôle d'une efficacité E du système 5 de post-traitement.

Selon la présente invention, le procédé de contrôle comprend avantageusement une première étape de vérification AA qu'un certain nombre de conditions C sont réalisées.

Parmi ces conditions C, on trouve des conditions de premier type C1 qui sont des conditions de vérification d'état d'un des composants du système 5 de post-traitement. Plus particulièrement, une première condition de premier type C11 réside en une vérification que le capteur d'oxydes d'azote 11 est opérationnel. Le procédé de contrôle est mis en oeuvre si et seulement si le capteur d'oxyde d'azote 11 est opérationnel. Plus particulièrement encore, une deuxième condition de premier type C12 réside en une vérification que l'injecteur d'agent réducteur 7 est opérationnel. Le procédé de contrôle est mis en oeuvre si et seulement si l'injecteur d'agent réducteur 7 est opérationnel. A titre d'exemple, l'injecteur d'agent réducteur 7 est opérationnel si la pompe 9 est opérationnelle. A titre d'exemple encore, l'injecteur d'agent réducteur 7 est opérationnel si une première température T₁ des gaz d'échappement 4 est supérieure à une première température-seuil T₁ₛₑᵤᵢₗ. Cette dernière est par exemple égale à 190°C.

Parmi ces conditions C, on trouve des conditions de deuxième type C2 qui sont des conditions d'encadrement de certains paramètres P. Parmi les conditions de deuxième type C2, on trouve des conditions d'un premier groupe C21 qui sont relatives au système 5 de post-traitement. Parmi les conditions de deuxième type C2, on trouve des conditions d'un deuxième groupe C22 qui sont relatives au moteur à combustion interne du véhicule automobile. Les conditions du deuxième type C2 (indifféremment du premier groupe ou du deuxième groupe) sont des conditions de vérification que certains paramètres P d'état du moteur à combustion interne du véhicule automobile sont contenus entre une valeur maximale Pmax du paramètre P et une valeur minimale Pmin du paramètre P. Ces paramètres P caractérisent indifféremment une condition de roulage du véhicule automobile et/ou un état de fonctionnement du véhicule automobile. Autrement dit, le procédé de contrôle de la présente invention est mis en oeuvre si et seulement l'ensemble desdits paramètres P sont compris à l'intérieur d'une fourchette respective de valeurs bornée par la valeur maximale Pmax du paramètre P et la valeur minimale Pmin du paramètre P. Une telle première étape de vérification permet de ne pas réaliser de contrôle lorsque l'un des paramètres P est inférieur à la valeur minimale Pmin ou est supérieur à la valeur maximale Pmax, afin de ne pas réaliser de contrôle lors d'une occurrence d'une dérive de l'un de ces paramètres P.

Les conditions du premier type C1 sont vérifiées préalablement aux conditions du deuxième type C2. Il ressort de l'ensemble de ces dispositions que l'efficacité E du système 5 de post-traitement est mesurée avec fiabilité et certitude.

En se reportant sur la figure 3, parmi les conditions du premier groupe C21, on trouve une première condition du premier groupe C211 qui réside en une vérification qu'une deuxième température T₂ d'un air ambiant est comprise entre une deuxième température minimale T₂ₘᵢₙ et une deuxième température maximale T₂ₘₐₓ. L'air ambiant est par exemple l'air extérieur au véhicule automobile. A titre d'exemple, la deuxième température minimale T₂ₘᵢₙ est égale à -10°C et une deuxième température maxmaie T₂ₘₐₓ est égale à 40 °C.

Parmi les conditions du premier groupe C21, on trouve une deuxième condition du premier groupe C212 qui réside en une vérification qu'un premier débit d'air D₁ pris en entrée du moteur à combustion interne 1 est compris entre un premier débit d'air minimum D₁ₘᵢₙ et un premier débit d'air maximum D₁ₘₐₓ. A titre d'exemple, le premier débit d'air minimum D₁ₘᵢₙ est égal à 5 kg/h et le premier débit d'air maximum D₁ₘₐₓ est égal à 700 kg/h.

Parmi les conditions du premier groupe C21, on trouve une troisième condition du premier groupe C213 qui réside en une vérification qu'un deuxième débit de gaz dans la ligne d'échappement D₂ pris en sortie de la chambre de combustion du moteur est compris entre un deuxième débit de gaz minimum D₂ₘᵢₙ et un deuxième débit de gaz maximum D₂ₘₐₓ. A titre d'exemple, le deuxième débit de gaz minimum D₂ₘᵢₙ est égal à 5 kg/h et le deuxième débit de gaz maximum D₂ₘₐₓ est égal à 700 kg/h.

Parmi les conditions du premier groupe C21, on trouve une quatrième condition du premier groupe C214 qui réside en une vérification qu'un troisième débit d'oxydes d'azote D₃ estimé en sortie d'une chambre de combustion du moteur à combustion interne 1 est compris entre un troisième débit d'oxydes d'azote minimum D₃ₘᵢₙ et un troisième débit d'oxydes d'azote maximum D₃ₘₐₓ. A titre d'exemple, le troisième débit d'air minimum D₃ₘᵢₙ est égal à 0 mg/s et le troisième débit d'air maximum D₃ₘₐₓ est égal à 1000 mg/s.

Parmi les conditions du premier groupe C21, on trouve une cinquième condition du premier groupe C215 qui réside en une vérification qu'une troisième température T₃ du catalyseur de réduction 6 est comprise entre une troisième température minimale T₃ₘᵢₙ et une troisième température maximale T₃ₘₐₓ. A titre d'exemple, la troisième température minimale T₃ₘᵢₙ est égale à 200 °C et la troisième température maximale T₃ₘₐₓ est égale à 450 °C.

Parmi les conditions du premier groupe C21, on trouve une sixième condition du premier groupe C216 qui réside en une vérification que l'efficacité E de post-traitement des oxydes d'azote estimée en sortie du catalyseur de réduction 6 est comprise entre une efficacité minimale Eₘᵢₙ et une efficacité maximale Eₘₐₓ. A titre d'exemple, l'efficacité minimale Eₘᵢₙ est égale à 50 % et l'efficacité maximale Eₘₐₓ est égale à 100 %.

Parmi les conditions du premier groupe C21, on trouve une septième condition du premier groupe C217 qui réside en une vérification qu'une masse M d'agent réducteur stockée à l'intérieur du catalyseur de réduction 6 est comprise entre une masse minimale Mₘᵢₙ et une masse maximale Mₘₐₓ. A titre d'exemple, la masse minimale Mₘᵢₙ est égale à 0,5 g/l et la masse maximale Mₘₐₓ est égale à 4 g/l.

En se reportant sur la figure 4, parmi les conditions du deuxième groupe C22, on trouve une première condition du deuxième groupe C221 qui réside en une vérification qu'une vitesse V du véhicule automobile est comprise entre une vitesse minimale Vₘᵢₙ et une vitesse maximale Vₘₐₓ. A titre d'exemple, la vitesse minimale Vₘᵢₙ est égale à 40 km/h et la vitesse maximale Vₘₐₓ est égale à 140 km/h.

Parmi les conditions du deuxième groupe C22, on trouve une deuxième condition du deuxième groupe C222 qui réside en une vérification qu'un couple-moteur K délivré par le moteur à combustion interne 1 est compris entre un couple-moteur minimum Kₘᵢₙ et un couple-moteur maximum Kₘₐₓ. A titre d'exemple, le couple-moteur minimum Kₘᵢₙ est égal à 30 N.m et le couple-moteur Kₘₐₓ est égale à 200 N.m.

Parmi les conditions du deuxième groupe C22, on trouve une troisième condition du deuxième groupe C223 qui réside en une vérification qu'un gradient du couple-moteur G délivré par le moteur à combustion interne 1 est compris entre un gradient minimum Gₘᵢₙ et un gradient maximum Gₘₐₓ. A titre d'exemple, le gradient minimum Gₘᵢₙ est égal à - 150 N.m/s et le gradient maximum Gₘₐₓ est égale à 150 N.m/s.

Parmi les conditions du deuxième groupe C22, on trouve une quatrième condition du deuxième groupe C224 qui réside en une vérification qu'un quatrième débit D4 de carburant injecté par un injecteur de carburant à l'intérieur de la chambre de combustion du moteur à combustion interne 1 est compris entre un quatrième débit minimum D₄ₘᵢₙ et un quatrième débit maximum D₄ₘₐₓ. A titre d'exemple, le quatrième débit minimum D₄ₘᵢₙ est égal à 5 mg/coup et le quatrième débit maximum D₄ₘₐₓ est égal à 50 mg/coup.

Parmi les conditions du deuxième groupe C22, on trouve une cinquième condition du deuxième groupe C225 qui réside en une vérification qu'un phasage Q d'injection de carburant à l'intérieur de la chambre de combustion du moteur à combustion interne 1 est compris entre un phasage minimum Qₘᵢₙ et un phasage maximum Qₘₐₓ. A titre d'exemple, le phasage minimum Qₘᵢₙ est égal à -5° vilebrequin et le phasage maximum Qₘₐₓ est égale à 15° vilebrequin par rapport au PMH (point mort hait).

Parmi les conditions du deuxième groupe C22, on trouve une sixième condition du deuxième groupe C226 qui réside en une vérification qu'une quatrième température T₄ du moteur à combustion interne 1 est comprise entre une quatrième température minimale T₄ₘᵢₙ et une quatrième température maximale T₄ₘₐₓ. A titre d'exemple, la quatrième température minimale T₄ₘᵢₙ est égale à 30 °C et la quatrième température maxmale T₄ₘₐₓ est égale à 100 °C.

La présente invention propose que de préférence l'ensemble des conditions susvisées soient vérifiées au cours de la première étape de vérification AA préalablement à une deuxième étape BB d'analyse de l'efficacité E dudit système 5. Il en découle qu'en aucun cas, l'analyse du système 5 est effectuée lorsque que l'une des conditions susvisées n'est pas vérifiée. Il en résulte une minimisation de l'occurrence d'erreur dans un résultat d'analyse de l'efficacité E dudit système 5, y compris dans le cas évoqué ci-dessus où le capteur d'oxydes d'azote 11 est unique. A titre d'exemple, la durée d'une analyse d'efficacité est de -150 secondes.

De plus, la présente invention permet une mise en oeuvre d'une analyse d'efficacité E lorsque l'un quelconque des paramètres P évoqués prend successivement une première valeur particulière P1, puis une deuxième valeur particulière P2. A titre d'exemple, la mise en oeuvre de l'analyse de ladite efficacité E est réalisée lorsque la vitesse V du véhicule automobile est égale à une première vitesse particulière V1 de l'ordre de 50 km/h, à plus ou moins 5 km/h, puis est égale à une deuxième vitesse particulière V2 de l'ordre de 10 km/h, à plus ou moins 2 km/h. En se reportant sur la figure 5, qui représente la vitesse V du véhicule automobile en fonction du temps, on distingue des plages successives PI1, PI2, PI3, PI4, PI5, PI6 de vitesse V pendant lesquelles l'analyse d'efficacité E est effectuée.

La deuxième étape BB d'analyse de l'efficacité E dudit système 5 est notamment réalisée à partir d'une information de concentration en oxydes d'azote fournie par le capteur d'oxydes d'azote 11 placé en aval du catalyseur de réduction sur la ligne d'échappement 2, selon le dit sens de circulation 8.

Une troisième étape CC de comparaison successive de l'efficacité E analysée à une efficacité-seuil, Eseuil, est ensuite réalisée. Une efficacité-seuil typique est par exemple de l'ordre de 70 %.

Dans le cas CC1 où l'efficacité E est supérieure de manière répétée, par exemple suite à 2 analyses consécutives, à l'efficacité-seuil Eseuil, alors il en découle un premier constat R1 selon lequel le catalyseur de réduction 6 et l'injecteur d'agent réducteur 7 fonctionnent de manière satisfaisante.

Dans le cas CC2 où l'efficacité E est inférieure de manière répétée, par exemple suite à 2 analyses consécutives, à l'efficacité-seuil Eseuil, alors il en découle un deuxième constat R2 selon lequel un recalage du système 5 est nécessaire. Un tel recalage comprend une opération de recalage en boucle fermée, essentiellement basée sur l'information fournie par le capteur d'oxydes d'azote 11. L'opération de recalage en boucle fermée consiste à augmenter une quantité d'agent réducteur délivrée par l'injecteur d'agent réducteur 7 jusqu'à ce que l'information fournie par le capteur d'oxydes d'azote 11 soit satisfaisante. Un tel recalage en boucle fermée permet une compensation des dispersions de l'efficacité E, notamment des dispersions affectant l'information relative à la masse M d'agent réducteur stockée à l'intérieur du catalyseur de réduction 6.

Dans le cas où un nombre NB de d'opérations de recalage effectuée est supérieure à un nombre maximum toléré NBmax sans que l'information fournie par le capteur d'oxydes d'azote 11 soit satisfaisante, alors un troisième constat R3 est réalisé selon lequel le catalyseur de réduction 6 et/ou l'injecteur d'agent réducteur 7 est défaillant. Le nombre maximum toléré NBmax est par exemple de l'ordre de 3 fois.

Dans le cas où le nombre NB de d'opérations de recalage effectuée est inférieure au nombre maximum toléré NBmax pour que l'information fournie par le capteur d'oxydes d'azote 11 soit satisfaisante, alors un quatrième constat R4 est réalisé selon lequel le catalyseur de réduction 6 et l'injecteur d'agent réducteur 7 sont opérationnels, et l'algorithme 12 revient à la deuxième étape BB d'analyse de l'efficacité E dudit système 5.

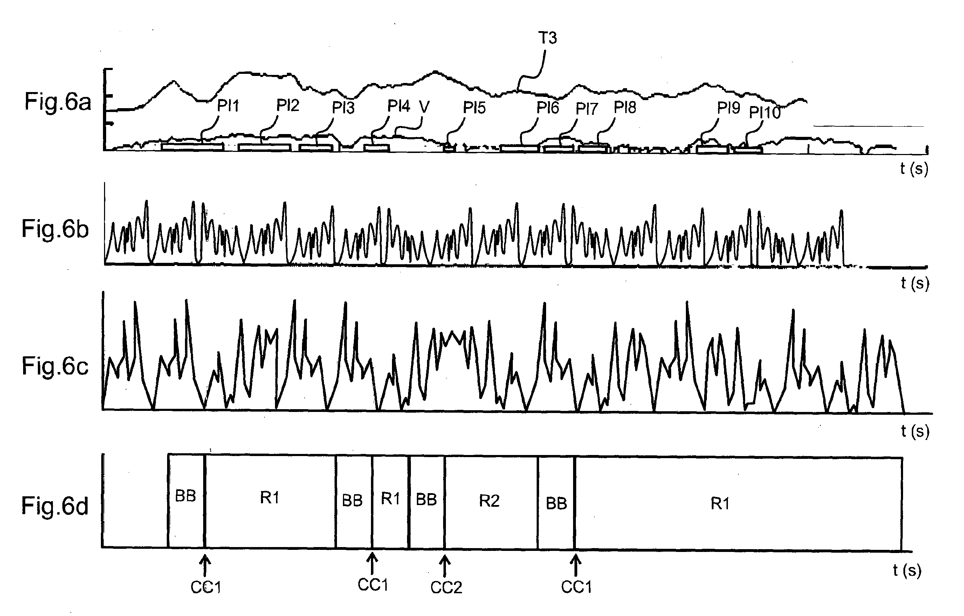

Sur la figure 6a, sont représentés ladite troisième température T3, ladite vitesse V et des fenêtres temporelles F1 à F10 où les conditions pour que des premières étapes de vérification AA successives sont remplies. Sur la figure 6b, est représentée une information relative à la concentration en oxydes d'azote en amont du catalyseur de réduction 6 selon ledit sens de circulation 8. Sur la figure 6c, est représentée une information relative à la concentration en oxydes d'azote en aval du catalyseur de réduction 6 selon ledit sens de circulation 8. Sur la figure 6d, sont illustrées schématiquement les différentes étapes susvisées de l'algorithme 12. Il est notable que si la deuxième étape BB d'analyse de l'efficacité E est suivie d'un diagnostic du type CC1 où l'efficacité E est supérieure de manière répétée à l'efficacité-seuil Eseuil, alors il en découle le premier constat R1 selon lequel le catalyseur de réduction 6 fonctionne de manière satisfaisante. Il est également notable que si la deuxième étape BB d'analyse de l'efficacité E est suivie d'un diagnostic du type CC2 où l'efficacité E est inférieure de manière répétée à l'efficacité-seuil Eseuil, alors il en découle le deuxième constat R2 selon lequel selon lequel un recalage en boucle fermée du système 5 est nécessaire.

L'ensemble de ces dispositions est telle que le procédé de mise en oeuvre du système 5 de post-traitement est fiable, y compris dans le cas où un unique capteur d'oxyde d'azote 11 est installée en aval du catalyseur de réduction 6 sur la ligne d'échappement 2. Une telle fiabilité est illustrée sur la figure 7 où il apparaît que les occurrences d'efficacité pour lesquelles le système 5 est défaillant sont dissociées des occurrences d'efficacité pour lesquelles le système est opérationnel, ces occurrences ne se recoupant pas.

## Revendications

1. Procédé de contrôle d'une efficacité d'un système (5) de post-traitement de gaz d'échappement (4) produits par un moteur à combustion interne (1) équipant un véhicule automobile, le procédé comprenant une étape d'injection d'un agent réducteur à l'intérieur d'une ligne d'échappement (2) le système (5) de post-traitement comprenant un catalyseur de réduction (6), **caractérisé en ce que** le procédé comprend une première étape de vérification (AA) comprenant une vérification de l'une quelconque des conditions de premier type (C1) qui sont constitués de conditions de vérification d'état de composants du système (5) de post-traitement, préalablement à une deuxième étape (BB) d'analyse d'une efficacité (E) dudit système (5).

2. Procédé selon la revendication 1, **caractérisé en ce que** les conditions de premier type (C1) comprennent une première condition de premier type (C11) comprenant une vérification qu'un capteur d'oxydes d'azote (11) est opérationnel, et une deuxième condition de premier type (C12) comprenant une vérification qu'un injecteur d'agent réducteur (7) est opérationnel.

3. Procédé selon l'une quelconque des revendications précédentes, **caractérisé en ce que** le procédé comprend une vérification de l'une quelconque des conditions de deuxième type (C2), la vérification des conditions de deuxième type étant effectué après la vérification d'une des conditions de premier type (C1).

4. Procédé selon la revendication 3, **caractérisé en ce que** les conditions de deuxième type (C2) comprennent des conditions d'un premier groupe (C21) qui sont relatives au système (5) de post-traitement ainsi que des conditions d'un deuxième groupe (C22) qui sont relatives au moteur à combustion interne du véhicule automobile.

5. Procédé selon la revendication 4, **caractérisé en ce que** les conditions de premier groupe (C21) comprennent au moins une condition prise seule ou en combinaison parmi :
- une première condition du premier groupe (C211) qui comprend une vérification qu'une deuxième température (T₂) d'un air ambiant est comprise entre une deuxième température minimale (T₂ₘᵢₙ) et une deuxième température maximale (T₂ₘₐₓ).
- une deuxième condition du premier groupe (C212) qui comprend une vérification qu'un premier débit d'air (D₁) pris en entrée du moteur à combustion interne (1) est compris entre un premier débit d'air minimum (D₁ₘᵢₙ) et un premier débit d'air maximum (D₁ₘₐₓ).
- une troisième condition du premier groupe (C213) qui comprend une vérification qu'un deuxième débit de gaz d'échappement (D₂) pris en sortie de la chambre de combustion est compris entre un deuxième débit de gaz minimum (D₂ₘᵢₙ) et un deuxième débit de gaz maximum (D₂ₘₐₓ).
- une quatrième condition du premier groupe (C214) qui comprend une vérification qu'un troisième débit d'oxydes d'azote (D₃) estimé en sortie d'une chambre de combustion du moteur à combustion interne (1) est compris entre un troisième débit d'oxydes d'azote minimum (D₃ₘᵢₙ) et un troisième débit d'oxydes d'azote maximum (D₃ₘₐₓ).
- une cinquième condition du premier groupe (C215) qui comprend une vérification qu'une troisième température (T₃) du catalyseur de réduction (6) est comprise entre une troisième température minimale (T₃ₘᵢₙ) et une troisième température maximale (T₃ₘₐₓ).
- une sixième condition du premier groupe (C216) qui comprend une vérification qu'une efficacité (E) de post-traitement des oxydes d'azote estimée en sortie du catalyseur de réduction (6) est comprise entre une efficacité minimale (Eₘᵢₙ) et une efficacité maximale (Eₘₐₓ).
- une septième condition du premier groupe (C217) qui comprend une vérification qu'une masse (M) d'un agent réducteur stockée à l'intérieur du catalyseur de réduction (6) est comprise entre une masse minimale (Mₘᵢₙ) et une masse maximale (Mₘₐₓ).

6. Procédé selon la revendication 4, **caractérisé en ce que** les conditions de deuxième groupe (C22) comprennent au moins une condition prise seule ou en combinaison parmi:
- une première condition du deuxième groupe (C221) qui comprend une vérification qu'une vitesse (V) du véhicule automobile est comprise entre une vitesse minimale (Vₘᵢₙ) et une vitesse maximale (Vₘₐₓ).
- une deuxième condition du deuxième groupe (C222) qui comprend une vérification qu'un couple-moteur (K) délivré par le moteur à combustion interne (1) est compris entre un couple-moteur minimum (Kₘᵢₙ) et un couple-moteur maximum (Kₘₐₓ).
- une troisième condition du deuxième groupe (C223) qui comprend une vérification qu'un gradient du couple-moteur (G) délivré par le moteur à combustion interne (1) est compris entre un gradient minimum (Gₘᵢₙ) et un gradient maximum (Gₘₐₓ).
- une quatrième condition du deuxième groupe (C224) qui comprend une vérification qu'un quatrième débit (D4) d'un carburant injecté par un injecteur de carburant à l'intérieur d'une chambre de combustion du moteur à combustion interne (1) est compris entre un quatrième débit minimum (D₄ₘᵢₙ) et un quatrième débit maximum (D₄ₘₐₓ).
- une cinquième condition du deuxième groupe (C225) qui comprend une vérification qu'un phasage (Q) d'injection de carburant à l'intérieur d'une chambre de combustion du moteur à combustion interne (1) est compris entre un phasage minimum (Qₘᵢₙ) et un phasage maximum (Qₘₐₓ).
- une sixième condition du deuxième groupe (C226) qui comprend une vérification qu'une quatrième température (T₄) du moteur à combustion interne (1) est comprise entre une quatrième température minimale (T₄ₘᵢₙ) et une quatrième température maximale (T₄ₘₐₓ).

7. Procédé selon l'une quelconque des revendications précédentes, **caractérisé en ce que** la deuxième étape (BB) d'analyse de l'efficacité (E) dudit système (5) précède une troisième étape (CC) de comparaisons successives de l'efficacité (E) à une efficacité-seuil (Eseuil).

8. Procédé selon la revendication 7, **caractérisé en ce que**, si l'efficacité (E) est inférieure de manière répétée à l'efficacité-seuil (Eseuil), le procédé comprend une opération de recalage en boucle fermée du système (5).

9. Procédé selon l'une quelconque des revendications 7 et 8, **caractérisé en ce que** la deuxième étape (BB) d'analyse de l'efficacité (E) dudit système (5) est effectuée lorsque l'un quelconque de paramètres (P) vérifiés lors de la première étape de vérification (AA) prend successivement une première valeur particulière (P1), puis une deuxième valeur particulière (P2).

## Patentansprüche

1. Verfahren zur Steuerung der Wirksamkeit eines Systems (5) zur Nachbearbeitung von Abgas (4), das von einem Verbrennungsmotor (1) erzeugt wird, der ein Kraftfahrzeug ausstattet, wobei das Verfahren einen Schritt des Injizierens eines Reduktionsmittels in das Innere einer Abgasleitung (2) umfasst, wobei das System (5) zur Nachbearbeitung einen Reduktionskatalysator (6) umfasst, **dadurch gekennzeichnet, dass** das Verfahren einen ersten Schritt des Überprüfens (AA) umfasst, umfassend eine Überprüfung irgendeiner der Bedingungen vom ersten Typ (C1), die aus Bedingungen zur Überprüfung des Zustands von Komponenten des Systems (5) zur Nachbearbeitung bestehen, vor einem zweiten Schritt (BB) des Analysierens der Wirksamkeit (E) des Systems (5).

2. Verfahren nach Anspruch 1, **dadurch gekennzeichnet, dass** die Bedingungen vom ersten Typ (C1) eine erste Bedingung vom ersten Typ (C11) umfassen, umfassend eine Überprüfung, dass ein Stickstoffoxid-Sensor (11) einsatzbereit ist, und eine zweite Überprüfung vom ersten Typ (C12), umfassend eine Überprüfung, dass ein Injektor von Reduktionsmittel (7) einsatzbereit ist.

3. Verfahren nach einem der vorhergehenden Ansprüche, **dadurch gekennzeichnet, dass** das Verfahren eine Überprüfung irgendeiner der Bedingungen vom zweiten Typ (C2) umfasst, wobei die Überprüfung der Bedingungen vom zweiten Typ nach der Überprüfung einer der Bedingungen vom ersten Typ (C1) durchgeführt wird.

4. Verfahren nach Anspruch 3, **dadurch gekennzeichnet, dass** die Bedingungen vom zweiten Typ (C2) Bedingungen einer ersten Gruppe (C21) umfassen, die mit dem System (5) zur Nachbehandlung in Bezug stehen, sowie Bedingungen einer zweiten Gruppe (C22), die mit dem Verbrennungsmotor des Kraftfahrzeugs in Beziehung stehen.

5. Verfahren nach Anspruch 4, **dadurch gekennzeichnet, dass** die Bedingungen der ersten Gruppe (C21) mindestens eine Bedingung umfassen, die einzeln oder in Kombination aus Folgendem entnommen ist:
- einer ersten Bedingung der ersten Gruppe (C211), die eine Überprüfung umfasst, dass eine zweite Temperatur (T2) einer Umgebungsluft zwischen einer zweiten minimalen Temperatur (T2min) und einer zweiten maximalen Temperatur (T2max) enthalten ist;
- einer zweiten Bedingung der ersten Gruppe (C212), die eine Überprüfung umfasst, dass ein erster Luftstrom (D1), der am Eingang des Verbrennungsmotors (1) entnommen wird, zwischen einem ersten minimalen Luftstrom (D1 min) und einem ersten maximalen Luftstrom (D1 max) enthalten ist;
- einer dritten Bedingung der ersten Gruppe (C213), die eine Überprüfung umfasst, dass ein zweiter Abgasstrom (D2), der am Ausgang der Verbrennungskammer entnommen wird, zwischen einem zweiten minimalen Gasstrom (D2min) und einem zweiten maximalen Gasstrom (D2max) enthalten ist;
- einer vierten Bedingung der ersten Gruppe (C214), die eine Überprüfung umfasst, dass ein dritter Stickstoffoxidstrom (D3), der am Ausgang einer Verbrennungskammer des Verbrennungsmotors (1) geschätzt wird, zwischen einem dritten minimalen Stickstoffoxidstrom (D3min) und einem dritten maximalen Stickstoffoxidstrom (D3max) enthalten ist;
- einer fünften Bedingung der ersten Gruppe (C215), die eine Überprüfung umfasst, dass eine dritte Temperatur (T3) des Reduktionskatalysators (6) zwischen einer dritten minimalen Temperatur (T3min) und einer dritten maximalen Temperatur (T3max) enthalten ist;
- einer sechsten Bedingung der ersten Gruppe (C216), die eine Überprüfung umfasst, dass eine Wirksamkeit (E) zur Nachbearbeitung der Stickstoffoxide, die am Ausgang des Reduktionskatalysators (6) geschätzt wird, zwischen einer minimalen Wirksamkeit (Emin) und einer maximalen Wirksamkeit (Emax) enthalten ist;
- einer siebten Bedingung der ersten Gruppe (C217), die eine Überprüfung umfasst, dass eine Masse (M) eines Reduktionsmittels, die im inneren des Reduktionskatalysators (6) gelagert ist, zwischen einer minimalen Masse (Mmin) und einer maximalen Masse (Mmax) enthalten ist.

6. Verfahren nach Anspruch 4, **dadurch gekennzeichnet, dass** die Bedingungen der zweiten Gruppe (C22) mindestens eine Bedingung umfassen, die einzeln oder in Kombination aus Folgendem entnommen ist:
- einer ersten Bedingung der zweiten Gruppe (C221), die eine Überprüfung umfasst, dass eine Geschwindigkeit (V) des Kraftfahrzeugs zwischen einer minimalen Geschwindigkeit (Vmin) und einer maximalen Geschwindigkeit (Vmax) enthalten ist;
- einer zweiten Bedingung der zweiten Gruppe (C222), die eine Überprüfung umfasst, dass ein Motordrehmoment (K), das vom Verbrennungsmotor (1) geliefert wird, zwischen einem minimalen Motordrehmoment (Kmin) und einem maximalen Motordrehmoment (Kmax) enthalten ist;
- einer dritten Bedingung der zweiten Gruppe (C223), die eine Überprüfung umfasst, dass ein Gradient des Motordrehmoments (G), das vom Verbrennungsmotor (1) geliefert wird, zwischen einem minimalen Gradienten (Gmin) und einem maximalen Gradienten (Gmax) enthalten ist;
- einer vierten Bedingung der zweiten Gruppe (C224), die eine Überprüfung umfasst, dass ein vierter Strom eines Kraftstoffs, der von einem Treibstoffinjektor in das Innere einer Verbrennungskammer des Verbrennungsmotors (1) injiziert wird, zwischen einem vierten minimalen Strom (D4min) und einem vierten maximalen Strom (D4max) enthalten ist;
- einer fünften Bedingung der zweiten Gruppe (C225), die eine Überprüfung umfasst, dass eine Phasierung (Q) der Kraftstoffinjektion in das Innere einer Verbrennungskammer des Verbrennungsmotors (1) zwischen einer minimalen Phasierung (Qmin) und einer maximalen Phasierung (Qmax) enthalten ist;
- einer sechsten Bedingung der zweiten Gruppe (C226), die eine Überprüfung umfasst, dass eine vierte Temperatur (T4) des Verbrennungsmotor (1) zwischen einer vierten minimalen Temperatur (T4min) und einer vierten maximalen Temperatur (T4max) enthalten ist.

7. Verfahren nach einem der vorhergehenden Ansprüche, **dadurch gekennzeichnet, dass** der zweite Schritt (BB) des Analysierens der Wirksamkeit (E) des Systems (5) einem dritten Schritt (CC) der aufeinander folgenden Vergleiche der Wirksamkeit (E) mit einer Wirksamkeits-Schwelle (Eseuil) vorausgeht.

8. Verfahren nach Anspruch 7, **dadurch gekennzeichnet, dass**, wenn die Wirksamkeit (E) wiederholt geringer als die Wirksamkeits-Schwelle (Eseuil) ist, das Verfahren eine Funktion der Rückstellung in den geschlossenen Kreis des Systems (5) umfasst.

9. Verfahren nach einem der Ansprüche und bis 8, dadurch gekennzeichnet, dass der zweite Schritt (BB) des Analysierens der Wirksamkeit (E) des Systems (5) durchgeführt wird, wenn einer der Parameter (P), die während des ersten Schritts des Überprüfens (AA) überprüft werden, aufeinander folgend einen ersten bestimmten Wert (P1) dann einen zweiten bestimmten Wert (P2) annimmt.

## Claims

1. Method for monitoring the efficiency of a system (5) for the after-treatment of exhaust gas (4) produced by an internal combustion engine (1) fitted within a motor vehicle, this method including a step for injecting a reducing agent into an exhaust line (2), the after-treatment system (5) comprising a reduction catalyst (6), **characterised in that** the method includes a first verification step (AA) involving a verification of any one of the first type of conditions (C1) formed from conditions verifying the status of the components of the after-treatment system (5), prior to a second step (BB) for analysing the efficiency (E) of said system (5).

2. Method according to claim 1, **characterised in that** the first type of conditions (C1) includes a first condition (C11) of the first type of conditions comprising a verification that a nitrogen oxide sensor (11) is operational, and a second condition (C12) of the first type of conditions comprising a verification that a reducing agent injector (7) is operational.

3. Method according to any one of the previous claims, **characterised in that** the method includes a verification of any one of the second type of conditions (C2), the verification of the second type of conditions taking place after the verification of one of the first type of conditions (C1).

4. Method according to claim 3, **characterised in that** the second type of conditions (C2) includes a first group of conditions (C21) which relate to the after-treatment system (5), in addition to a second group of conditions (C22) which relate to the internal combustion engine of the motor vehicle.

5. Method according to claim 4, **characterised in that** the first group of conditions (C21) includes at least one condition taken either singly or as a combination of:
- a first condition of the first group (C211), which includes a verification that a second temperature (T₂) of an ambient air is between a second minimum temperature (T₂ₘᵢₙ) and a second maximum temperature (T₂ₘₐₓ).
- a second condition of the first group (C212), which includes a verification that a first air flow (D₁) measured at the inlet of the internal combustion engine (1) is between a first minimum air flow (D₁ₘᵢₙ) and a first maximum air flow (D₁ₘₐₓ).
- a third condition of the first group (C213), which includes a verification that a second exhaust gas flow (D₂) measured at the outlet of the combustion chamber is between a second minimum gas flow (D₂ₘᵢₙ) and a second maximum gas flow (D₂ₘₐₓ).
- a fourth condition of the first group (C214), which includes a verification that a third nitrogen oxide flow (D₃) estimated at the outlet of a combustion chamber of the internal combustion engine (1) is between a third minimum nitrogen oxide flow (D₃ₘᵢₙ) and a third maximum nitrogen oxide flow (D₃ₘₐₓ).
- a fifth condition of the first group (C215), which includes a verification that a third temperature (T₃) of the reduction catalyst (6) is between a third minimum temperature (T₃ₘᵢₙ₎ and a third maximum temperature (T₃ₘₐₓ).
- a sixth condition of the first group (C216), which includes a verification that a nitrogen oxide after-treatment efficiency (E) estimated at the outlet of the reduction catalyst (6) is between a minimum efficiency (Eₘᵢₙ) and a maximum efficiency (Eₘₐₓ).
- a seventh condition of the first group (C217), which includes a verification that a mass (M) of a reducing agent stored within the reduction catalyst (6) is between a minimum mass (Mₘᵢₙ) and a maximum mass (Mₘₐₓ).

6. Method according to claim 4, **characterised in that** the second group of conditions (C22) includes at least one condition taken either singly or as a combination of:
- a first condition of the second group (C221), which includes a verification that a speed (V) of the motor vehicle is between a minimum speed (Vₘᵢₙ) and a maximum speed (Vₘₐₓ).
- a second condition of the second group (C222), which includes a verification that an engine torque (K) delivered by the internal combustion engine (1) is between a minimum engine torque (Kₘᵢₙ) and a maximum engine torque (Kₘₐₓ).
- a third condition of the second group (C223), which includes a verification that an engine torque gradient (G) delivered by the internal combustion engine (1) is between a minimum gradient (Gₘᵢₙ) and a maximum gradient (Gₘₐₓ).
- a fourth condition of the second group (C224), which includes a verification that a fourth flow (D4) of a fuel injected by a fuel injector in a combustion chamber of the internal combustion engine (1) is between a fourth minimum flow (D₄ₘᵢₙ) and a fourth maximum flow (D₄ₘₐₓ).
- a fifth condition of the second group (C225), which includes a verification that a fuel injection phasing (Q) in a combustion chamber of the internal combustion engine (1) is between a minimum phasing (Qₘᵢₙ) and a maximum phasing (Qₘₐₓ).
- a sixth condition of the second group (C226), which includes a verification that a fourth temperature (T₄) of the internal combustion engine (1) is between a fourth minimum temperature (T₄ₘᵢₙ) and a fourth maximum temperature (T₄ₘₐₓ).

7. Method according to any one of the previous claims, **characterised in that** the second step (BB) for analysing the efficiency (E) of said system (5) precedes a third step (CC) for successively comparing the efficiency (E) with a threshold efficiency (Eseuil).

8. Method according to claim 7, **characterised in that** if the efficiency (E) is repeatedly below the threshold efficiency (Eseuil), the method includes an operation for the closed-loop reset of the system (5).

9. Method according to any one of claims 7 and 8, **characterised in that** the second step (BB) for analysing the efficiency (E) of said system (5) takes place when any one of the parameters (P) verified in the first verification step (AA) successively assumes a first specific value (P1), then a second specific value (P2).
